# EUROPEAN PATENT APPLICATION

(11) **EP 2 911 258 A1**
(43) Date of publication of application: **26.08.2015**
(21) Application number: 13847677.5
(22) Date of filing: 15.10.2013
(51) Int. Cl.: H02J 1/00

(54) **ELECTRIC POWER ROUTER, ELECTRIC POWER NETWORK SYSTEM, ELECTRIC POWER INTERCHANGE METHOD, AND PROGRAM FOR CONTROLLING OPERATION OF ELECTRIC POWER ROUTER**

(30) Priority: 19.10.2012 JP 2012231590
(71) Applicant: NEC Corporation, Tokyo 108-8001 (JP); Abe, Rikiya, Naka-gun, Kanagawa 259-0132 (JP)
(72) Inventor: ABE, Rikiya, Naka-gun, Kanagawa 259-0132 (JP); ICHINO, Kiyohisa, Tokyo 108-8001 (JP)
(74) Representative: Vossius & Partner Patentanwälte Rechtsanwälte mbB
(86) International application number: PCT/JP2013/006116
(87) International publication number: WO 2014/061259

(57) **Abstract**

Provided is a power router to construct a power network system in which power cells are asynchronously interconnected. The power router includes a DC bus, a power conversion leg having a function of bidirectionally converting power, and a controller that controls an operation of the power conversion leg. The controller controls an operation of the power conversion leg in an operation mode which is one of a master mode and a designated power transmission/reception mode. The power conversion leg operated in the master mode supplements, when a voltage of the DC bus decreases from a rated voltage, an insufficient power from a connection partner, and sends, when the voltage of the DC bus increases from the rated voltage, an excessive power to the connection partner. The power conversion leg operated in the designated power transmission/reception mode sends a designated power to the connection partner or receives the designated power from the connection partner according to a designation from a management server. The controller sets the mode of at least one of the power conversion legs to the master mode during the operation of the power router.

## Description

### Technical Field

The present invention provides a power router that asynchronously interconnects a plurality of power cells and performs power interchange control of a plurality of routes. Further, the present invention relates to a power network system formed by asynchronous connection using this power router.

### Background Art

When a power supply system is constructed, in addition to a further expansion of a power distribution grid in a more stable way, a main issue has been providing such a system with a capability of introducing a large amount of natural energy. A power network system called Digital Grid (registered trademark) has been proposed as a new power network (see Patent literature 1: Japanese Patent No. 4783453, Non-patent literature 1: Website of Digital Grid Consortium, http://www.digitalgrid.org/index.php/jp/).

Digital Grid (registered trademark) is a power network system in which a power network is partitioned into small-sized cells and these cells are asynchronously interconnected. Each power cell may be small (e.g., a house, a building, or a commercial facility) or may be large (e.g., a prefecture or a municipality). Each power cell naturally includes a load, and may also include a power generation facility or a power storage system. The power generation facility may be, as an example, a power generation facility that uses natural energy generated by, for example, photovoltaic power, wind power, and geothermal power.

In order to freely generate power inside each power cell and to further smoothly interchange power among the power cells, the power cells are asynchronously connected. (That is, even when the plurality of power cells are interconnected, a frequency, a phase, and a voltage of power used in each power cell is asynchronous with those used in other power cells.)

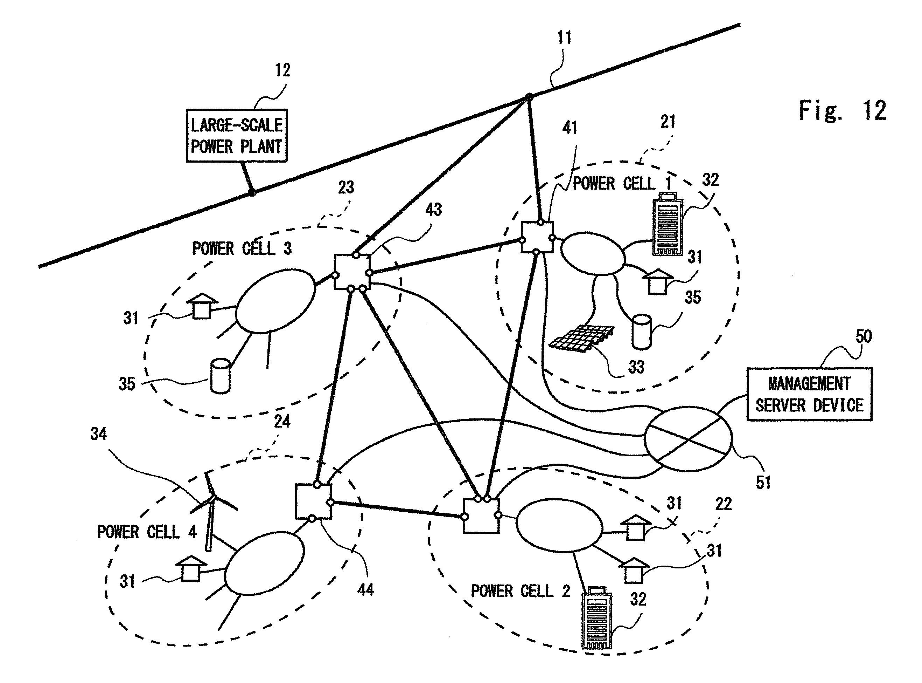

Fig. 12 shows an example of a power network system 10. In Fig. 12, a utility grid 11 sends bulk power from a large-scale power plant 12. A plurality of power cells 21-24 are arranged. Each of the power cells 21-24 includes a load such as a house 31 and a building 32, power generation facilities 33 and 34, and a power storage system 35.

The power generation facility may include, as an example, a solar panel 33 and a wind turbine 34. The power storage system is, for example, a storage battery 34. In this specification, the power generation facility and the power storage system may be collectively called a distributed power supply.

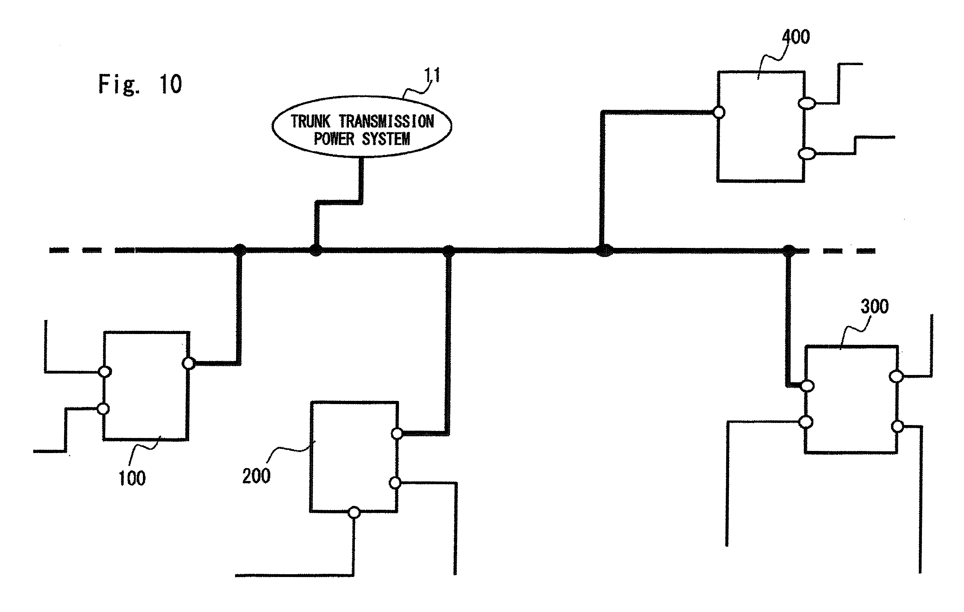

Further, the power cells 21-24 respectively include power routers 41-44 which serve as connection ports to be connected to other power cells or the utility grid 11. Each of the power routers 41-44 includes a plurality of legs (LEG). (Due to space constraints, the symbols for the legs are omitted in Fig. 10. It should be interpreted that the white circles attached to the power routers 41-44 are connection terminals of each leg.)

Now, each leg includes a connection terminal and a power conversion unit, and an address is attached to each leg. The power conversion by the leg means converting AC to DC or DC to AC and changing the phase, the frequency, and the voltage of the power.

All the power routers 41-44 are connected to a management server 50 by a communication network 51, and operations of all the power routers 41-44 are integrally controlled by the management server 50. For example, the management server 50 instructs each of the power routers 41-44 to transmit or receive power for each leg using the address attached to each leg. Accordingly, power is interchanged among power cells through the power routers 41-44.

Since power interchange among the power cells is achieved, a plurality of power cells can share, for example, one power generation facility 33 or 34 or one power storage system 35. If an excessive power can be interchanged among the power cells, a supply-demand balance of power can be kept stable while greatly reducing the equipment cost.

### Citation List

### Patent Literature

**Patent literature 1:** Japanese Patent No. 4783453

### Non Patent Literature

**Non-patent literature 1:** Website of Digital Grid Consortium (http://www.digitalgrid.org/index.php/jp/)

### Summary of Invention

### Technical Problem

If the plurality of power cells can be asynchronously connected by the power routers, the advantage caused by this asynchronous connection would be extremely large. It is thus expected that the power routers will be put into practical use at an early stage.

However, in order to put the power routers into practical use in reality, there is a specific problem that conventional power transmission and distribution facilities do not have. Since a power transmission and distribution facility which is the current mainstream assumes a power system in which a voltage, a phase, and a frequency are fully synchronized, power routers that connect power systems having different voltages, phases, or frequencies raise the new problem.

### Solution to Problem

A power router according to the present invention is a power router to asynchronously connect a power cell to an external power system, the power router including: a DC bus whose voltage is kept to a predetermined rated voltage; a power conversion leg including one connection end connected to the DC bus and another connection end connected to an external connection partner as an external connection terminal, the power conversion leg including a function of bidirectionally converting power between the one connection end and the other connection end; and a controller that controls an operation of the power conversion leg, in which: a plurality of the power conversion legs are provided, the power router is controlled according to an instruction from a management server, the controller controls an operation of the power conversion leg in an operation mode which is one of a master mode and a designated power transmission/reception mode, the power conversion leg operated in the master mode supplements an insufficient power from the connection partner when the voltage of the DC bus decreases from a rated voltage, and sends an excessive power to the connection partner when the voltage of the DC bus increases from the rated voltage, the power conversion leg operated in the designated power transmission/reception mode sends a designated power to the connection partner or receives the designated power from the connection partner according to a designation from the management server, and the controller sets the operation mode of at least one of the power conversion legs to the master mode during the operation of the power router.

A power network system according to the present invention includes: one or a plurality of the power routers; and a power system to which the power router is directly or indirectly connected, in which the connection partner to which the power conversion leg operated in the master mode is directly or indirectly connected is restricted to one of a distributed power supply and a utility grid connected to a main power plant.

Further, a power network system according to the present invention includes two or more of the power routers, and power is sent between the power routers.

A power interchange method according to the present invention includes interchanging power by sending power between the power routers using two or more of the power routers.

An operation control program of a power router according to the present invention is an operation control program of a power router that includes: a DC bus whose voltage is kept to a predetermined rated voltage; and a power conversion leg including one connection end connected to the DC bus and another connection end connected to an external connection partner as an external connection terminal, the power conversion leg including a function of bidirectionally converting power between the one connection end and the other connection end, in which: a plurality of the power conversion legs are provided, the power router is controlled according to an instruction from a management server, the power router asynchronously connects a power cell to an external power system, the power router is built into a computer and the power router causes the computer to control an operation of the power conversion leg in an operation mode which is one of a master mode and a designated power transmission/reception mode, the power conversion leg operated in the master mode supplements an insufficient power from the connection partner when the voltage of the DC bus decreases from a rated voltage, and sends an excessive power to the connection partner when the voltage of the DC bus increases from the rated voltage, the power conversion leg operated in the designated power transmission/reception mode sends a designated power to the connection partner or receives the designated power from the connection partner according to a designation from the management server, and the operation mode of at least one of the power conversion legs is set to the master mode during the operation of the power router.

A non-transitory computer readable medium stores the operation control program of the power router.

### Advantageous Effects of Invention

According to the present invention, it is possible to build a power network system in which the power cells are asynchronously interconnected.

### Brief Description of Drawings

Fig. 1 is a diagram showing a schematic configuration of a power router;
Fig. 2 is a diagram showing the details of an internal configuration of the power router;
Fig. 3 is a diagram showing one example in which the power router is connected to a utility grid, a load, and various distributed power supplies;
Fig. 4A is a diagram showing an example of a combination of power routers whose connection is permitted;
Fig. 4B is a diagram showing an example of a combination of power routers whose connection is permitted;
Fig. 5A is a diagram showing an example of a combination of power routers whose connection is prohibited;
Fig. 5B is a diagram showing an example of a combination of power routers whose connection is prohibited;
Fig. 5C is a diagram showing an example of a combination of power routers whose connection is prohibited;
Fig. 5D is a diagram showing an example of a combination of power routers whose connection is prohibited;
Fig. 6A is a diagram showing an example of a combination of power routers whose connection is permitted when an AC-through leg is taken into consideration;
Fig. 6B is a diagram showing an example of a combination of power routers whose connection is permitted when the AC-through leg is taken into consideration;
Fig. 6C is a diagram showing an example of a combination of power routers whose connection is permitted when the AC-through leg is taken into consideration;
Fig. 6D is a diagram showing an example of a combination of power routers whose connection is permitted when the AC-through leg is taken into consideration;
Fig. 7 is a diagram showing a connection example in which AC-through legs are used;
Fig. 8 is a diagram showing patterns of a combination of power routers when the power routers are connected to each other;
Fig. 9 is a diagram of one example of a case in which four power routers are interconnected;
Fig. 10 is a diagram showing one example of a state in which a plurality of power routers are connected by a bus;
Fig. 11 is a diagram showing one example of a connection form in which a utility grid is provided between power routers; and
Fig. 12 is a diagram for describing the outline of a power network system.

### Description of Embodiments

An exemplary embodiment of the present invention will be described with reference to the drawings, in which elements are denoted by symbols.

### (First exemplary embodiment)

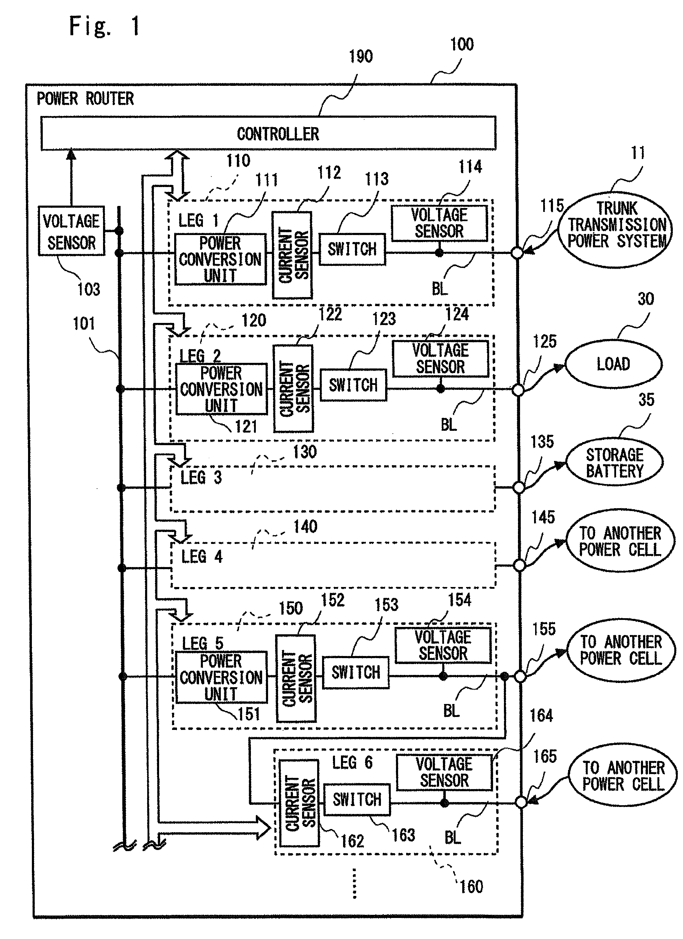

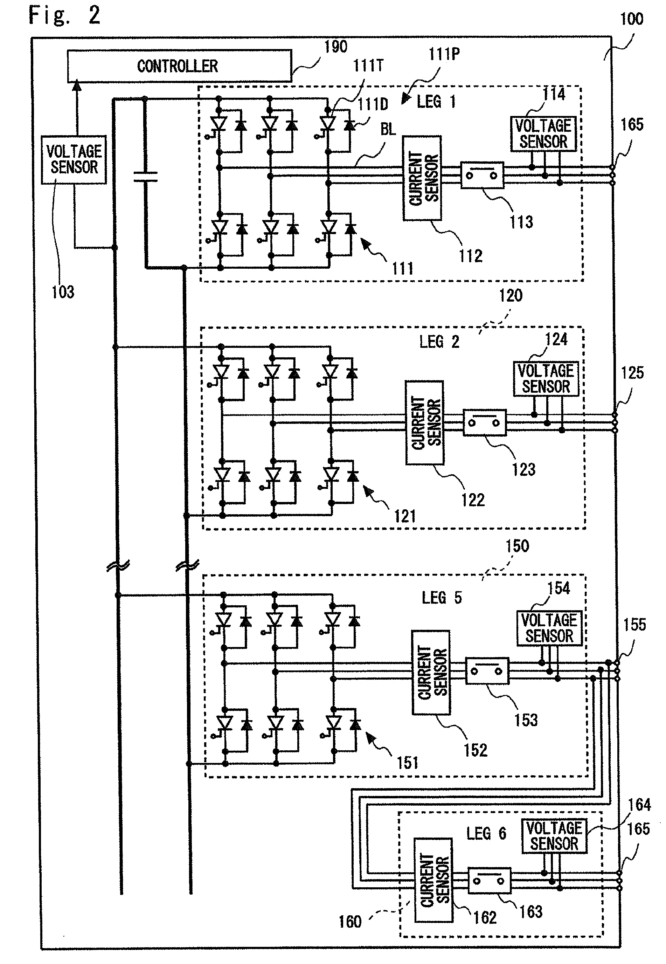

Fig. 1 is a diagram showing a schematic configuration of a power router 100 according to a first exemplary embodiment. Fig. 2 is a diagram showing the details of an internal configuration of the power router 100.

The power router 100 typically includes a DC bus 101, a plurality of legs 110-160, and a controller 190.

The controller 190 is a so-called computer and includes a CPU, a ROM, and a RAM.

The power router 100 includes the DC bus 101 to which the plurality of legs 110-160 are connected in parallel. The DC bus 101 is provided to enable DC power flow, and a voltage of the DC bus 101 is controlled to be constant.

### (How the voltage of the DC bus 101 is kept constant will be described later.)

The power router 100 is connected to the outside through each of the legs 110-160. All the power to be exchanged with the outside is once converted into DC and the DC flows through the DC bus 101. Since power is once converted into DC, it is possible to asynchronously connect power cells without any consideration for the differences in the phase, the voltage, or the frequency thereof. It is assumed here that the DC bus 101 is, as shown in Fig. 2, a parallel type including a smoothing capacitor 102. A voltage sensor 103 is connected to the DC bus 101, and a voltage value of the DC bus 101 detected by the voltage sensor 103 is sent to the controller 190.

Next, the plurality of legs 110-160 will be described. The plurality of legs 110-160 are provided in parallel with the DC bus. In Fig. 1, six legs 110-160 are shown. The six legs 110-160 are represented, as shown in Fig. 1, as a first leg 110, a second leg 120,..., and a sixth leg 160. In Fig. 1, due to space constraints, the first leg 110 is denoted by a leg 1 and the second leg 120 is denoted by a leg 2, for example. Further, in Fig. 2, the third leg 130 and the fourth leg 140 are omitted.

While the first leg 110 to the fifth leg 150 have the same configuration, the sixth leg 160 is different from the first to fifth legs 110-150 in that the sixth leg 160 does not include a power conversion unit. First, the configuration of the first leg 110 to the fifth leg 150 will be described. Since the first leg 110 to the fifth leg 150 have the same configuration, just the configuration of the first leg 110 will be described as an example.

The first leg 110 includes a power conversion unit 111, a current sensor 112, a switch 113, a voltage sensor 114, and a connection terminal 115. The power conversion unit 111 converts AC power to DC power or DC power to AC power. Since DC power flows through the DC bus 101, the power conversion unit 111 converts DC power flowing through the DC bus 101 to AC power having a predetermined frequency and voltage to allow the AC power to flow to the outside from the connection terminal 115. Otherwise, the power conversion unit 111 converts AC power that flows from the connection terminal 115 into DC power to allow the DC power to flow through the DC bus 101.

The power conversion unit 111 has a configuration of an inverter circuit in which anti-parallel circuits 111P formed of thyristors 111T and feedback diodes 111D are three-phase bridge-connected.

### (That is, six anti-parallel circuits 111P are provided for one inverter circuit.)

While the power conversion unit 111 is a three-phase inverter circuit since the three-phase AC is used in this example, a single-phase inverter circuit may be used instead. A line that is drawn from a node between two anti-parallel circuits 111P and connects the node and the connection terminal is called a branch line BL. (Since the three-phase AC is used, one leg includes three branch lines BL.)

The direction of the power, the frequency of the AC power and the like are controlled by the controller 190. That is, switching operations of the thyristors 111T are controlled by the controller 190. The operation control by the controller 190 will be described later.

The switch 113 is provided between the power conversion unit 111 and the connection terminal 115. The branch line BL is opened or closed by the operation of the switch 113, which means the connection between the outside and the DC bus 101 is broken or established. Further, the voltage of the branch line BL is detected by the voltage sensor 114 and the current value of the current flowing through the branch line BL is detected by the current sensor 112. The switching operation of the switch 113 is controlled by the controller 190 and the values detected by the voltage sensor 114 and the current sensor 112 are outputted to the controller 190.

While the power conversion unit is the inverter circuit and the connection partner of the leg uses AC as described above, the connection partner of the leg may instead use DC and may be, for example, a storage battery 35. (For example, in Fig. 1, the third leg 130 is connected to the storage battery 35.)

The power conversion in this case is DC-DC conversion. While not illustrated in the drawings, a DC power supply (e.g., solar cells or fuel cells) can be connected as well.

Accordingly, it is possible to provide an inverter circuit and a converter circuit in parallel in the power conversion unit and separately use the inverter circuit and the converter circuit depending on whether the connection partner is AC or DC.

Otherwise, a leg dedicated for DC-DC conversion in which the power conversion unit is a DC-DC conversion unit may be provided.

It will be often advantageous in terms of the size and the cost to use a power router that includes both a leg dedicated for AC-DC conversion and a leg dedicated for DC-DC conversion instead of providing the inverter circuit and the converter circuit in parallel in each leg.

The first leg 110 to the fifth leg 150 have the same configuration stated above.

Next, the sixth leg 160 will be described. The sixth leg 160 does not include a power conversion unit, which means a connection terminal 165 of the sixth leg 160 is not connected to the DC bus 101. The sixth leg 160 is connected to the branch line BL of the fifth leg 150. An internal wire of the sixth leg 160 is also called a branch line BL. The branch line BL of the sixth leg 160 is connected between the connection terminal 155 and the switch 153 of the fifth leg 150.

The sixth leg 160 includes a switch 163, a voltage sensor 164, a current sensor 162, and a connection terminal 165. The branch line BL of the sixth leg 160 is connected to the branch line BL of the fifth leg 150 through the switch 163. That is, the connection terminal 165 of the sixth leg 160 is connected to the connection terminal 155 of the fifth leg 150. Only the switch 163 is provided between the connection terminal 165 of the sixth leg 160 and the connection terminal 155 of the fifth leg 150 and the sixth leg 160 does not include a power converter. Accordingly, power is conducted between the connection terminal 165 of the sixth leg 160 and the connection terminal 155 of the fifth leg 150 without being converted. A leg such as the sixth leg 160 that does not include a power converter may be called an AC-through leg.

The current sensor 162 and the voltage sensor 164 detect a current value and a voltage value of the branch line BL to output the current value and the voltage value to the controller 190. The switching operation of the switch 163 is controlled by the controller 190.

### (Operation modes of legs)

The first leg 110 to the fifth leg 150 include power converters 111-151 and the switching operations of the thyristors in the power converters are controlled by the controller 190, as already described above.

The power router 100 is in the node of the power network 10, and plays an important role of connecting the utility grid 11, the load 30, a distributed power supply, power cells and the like. At this time, the connection terminals 115-165 of the respective legs 110-160 are connected to the utility grid 11, the load 30, the distributed power supply, and power routers of other power cells. The present inventors have noticed that the legs 110-160 have different roles depending on the connection partner and the power routers are not appropriately operated unless each of the legs 110-160 is appropriately operated according to each of their respective roles. While the legs have the same configuration, the present inventors have changed the method of operating the legs depending on the connection partner.

The method of operating the legs is called an operation mode.

The present inventors have prepared three types of operation modes of the legs, and the modes are switched according to the connection partner.

The operation modes of the legs include:
a master mode;
a stand-alone mode; and
a designated power transmission/reception mode.

In the following description, these operation modes will be described in series.

### (Master mode)

The master mode is an operation mode when a leg is connected to a stable power supply source such as an electrical grid, and is an operation mode to keep the voltage of the DC bus 101. In Fig. 1, an example in which the connection terminal 115 of the first leg 110 is connected to the utility grid 11 is shown. In the case of Fig. 1, the operation of the first leg 110 is controlled as a master mode, and plays a role of keeping the voltage of the DC bus 101. While many other legs 120-150 are connected to the DC bus 101, power may flow into the DC bus 101 from the legs 120-150 or may flow out from the legs 120-150. When the power flows out through the DC bus 101 and the voltage of the DC bus 101 decreases from the rated voltage, the leg 110 which is in the master mode supplements an insufficient amount of power due to the outflow from the connection partner (in this example, the utility grid 11). On the other hand, when the power flows into the DC bus 101 and the voltage of the DC bus 101 increases from the rated voltage, the leg 110 which is in the master mode transfers an excessive amount of power due to the inflow to the connection partner (in this example, the utility grid 11). The leg 110 which is in the master mode is therefore able to keep the voltage of the DC bus 101.

Accordingly, in one power router, at least one leg needs to be operated in the master mode. Otherwise, the voltage of the DC bus 101 is not kept constant. In one power router, two or more legs may be operated in the master mode. It is preferable, however, that only one leg be operated in the master mode in one power router.

Further, the leg which is in the master mode may be DC-connected to a DC power supply (e.g., fuel cell, storage battery) having a stable output instead of being connected to the utility grid. Further, for example, the leg which is in the master mode may be AC-connected to the distributed power supply (also including the storage battery) on which a self-commutated inverter is mounted. It is impossible, however, to connect the leg which is in the master mode and the distributed power supply on which an externally commutated inverter is mounted.

In the following description, the leg operated in the master mode may be referred to as a master leg.

The operation control of the master leg will be described.

The master leg is started as follows.

First, the switch 113 is set to the opened (broken) state. In this state, the connection terminal 115 is connected to the connection partner. In this embodiment, the connection partner is the utility grid 11.

The voltage sensor 114 measures the voltage of the utility grid of the connection partner and obtains the phase, the frequency, and the amplitude of the voltage of the utility grid using a phase-locked loop (PLL) or the like. After that, the output of the power conversion unit 111 is adjusted so that the voltage of the phase, the frequency, and the amplitude that are obtained is outputted from the power conversion unit 111. That is, the ON/OFF patterns of the thyristors 111T are determined. When this output is made stable, the switch 113 is turned on and the power conversion unit 111 and the utility grid 11 are connected. Since the output of the power conversion unit 111 and the voltage of the utility grid 11 are synchronized at this point, the current does not flow.

The operation control when the master leg is operated will be described.

The voltage of the DC bus 101 is measured by the voltage sensor 103. When the voltage of the DC bus 101 exceeds a predetermined rated bus voltage, the power conversion unit 111 is controlled so that power is sent from the master leg 110 to the utility grid. (At least one of the phase and the amplitude of the voltage outputted from the power conversion unit 111 is adjusted so that power is sent from the DC bus 101 to the utility grid 11 through the master leg 110.) The rated voltage of the DC bus 101 is predetermined.

On the other hand, when the voltage of the DC bus 101 is below the predetermined rated bus voltage, the power conversion unit 111 is controlled so that the master leg 110 is able to receive power from the utility grid 11. (At least one of the phase and the amplitude of the voltage outputted from the power conversion unit 111 is adjusted so that power is sent from the utility grid 11 to the DC bus 101 through the master leg 110.) It will be understood that, according to the operation of the master leg as described above, the voltage of the DC bus 101 can be kept to the predetermined rated voltage.

### (Stand-alone mode)

The stand-alone mode is an operation mode in which a leg generates a voltage of the amplitude and the frequency specified by the management server 50 by itself, and sends power to and receives power from the connection partner.

The stand-alone mode is, for example, an operation mode to supply power to a device such as the load 30 that consumes power. Alternatively, the stand-alone mode is an operation mode to directly receive power sent from the connection partner.

Fig. 1 shows an example in which the connection terminal 125 of the second leg 120 is connected to the load 30. The operation of the second leg 120 is controlled as the stand-alone mode and power is supplied to the load 30.

Further, when a leg is connected to another power router as in the fourth leg 140 or the fifth leg 150, the fourth leg 140 or the fifth leg 150 may be operated in the stand-alone mode as a mode to send power required by the other power router.

Alternatively, when a leg is connected to another power router as in the fourth leg 140 or the fifth leg 150, the fourth leg 140 or the fifth leg 150 may be operated in the stand-alone mode as a mode to receive power sent from the other power router.

While it is not illustrated in the drawings, the second leg can be operated in the stand-alone mode also in a case in which the second leg is connected to a power generation facility in place of the load 30. In this case, however, an externally commutated inverter is installed in the power generation facility.

The operation mode when the power routers are connected to each other will be described later.

The leg operated in the stand-alone mode is called a stand-alone leg. In one power router, a plurality of stand-alone legs may be provided.

The operation control of the stand-alone leg will be described.

First, a switch 123 is opened (broken). The connection terminal 125 is connected to the load 30. The management server 50 notifies the power router 100 of the amplitude and the frequency of the power (voltage) that should be supplied to the load 30. The controller 190 causes the power (voltage) of the specified frequency and the specified amplitude to be outputted from the power conversion unit 121 to the load 30. (In short, the ON/OFF patterns of the thyristors 121T are determined.) When this output becomes stable, the switch 123 is turned on to connect the power conversion unit 121 and the load 30. Lastly, when the power is consumed in the load 30, the power corresponding to the consumed amount flows out to the load 30 from the stand-alone leg 120.

### (Designated power transmission/reception mode)

A designated power transmission/reception mode is an operation mode for transmitting or receiving a designated amount of power. Specifically, the designated power transmission/reception mode includes a case in which the designated power is transmitted to the connection partner and a case in which the designated power is received from the connection partner.

In Fig. 1, the fourth leg 140 and the fifth leg 150 are connected to other power routers.

In such a case, a predetermined amount of power is fed from the fourth leg 140 or the fifth leg 150 to the other power router or from the other power router to the fourth leg 140 or the fifth leg 150.

Alternatively, the third leg 130 is connected to the storage battery 35.

In such a case, a predetermined amount of power is sent to the storage battery 35 to charge the storage battery 35.

Further, the designated power transmission/reception leg and the distributed power supply (also including the storage battery) on which a self-commutated inverter is mounted may be connected. However, the designated power transmission/reception leg and the distributed power supply on which an externally commutated inverter is mounted cannot be connected.

The leg operated in the designated power transmission/reception mode is called a designated power transmission/reception leg. In one power router, a plurality of designated power transmission/reception legs may be provided.

The operation control of the designated power transmission/reception leg will be described. Since the control when the designated power transmission/reception leg is started is basically the same as that when the master leg is started, a description thereof will be omitted.

The operation control when the designated power transmission/reception leg is operated will be described.

### (In the following description, symbols attached to the components of the fifth leg 150 will be used.)

A voltage sensor 154 measures the voltage of the electrical grid of the connection partner to obtain the phase and the frequency of the voltage of the connection partner using a phase-locked loop (PLL) or the like. The target value of the current that the power converter 151 receives or outputs is obtained based on an active power value and a reactive power value specified by the management server 50 and the phase and the frequency of the voltage of the connection partner. A current sensor 152 measures the current value of the current. The power converter 151 is adjusted so that the current corresponding to the difference between the target value and the current value is additionally output. (At least one of the phase and the amplitude of the voltage outputted from the power conversion unit 151 is adjusted so that a desired power flows between the designated power transmission/reception leg and the connection partner.)

From the above description, it will be understood that the first to fifth legs having the same configuration can play roles having three different patterns according to the method of the operation control.

### (Connection restrictions)

Since the operations of the legs vary according to the difference in the operation mode, there are respective restrictions regarding the selection of the connection partner and the selection of the operation mode. That is, when the connection partner is determined, the operation mode that can be selected is determined, and in contrast, when the operation mode is determined, the connection partner that can be selected is determined. (When the connection partner is changed, the operation mode of the leg needs to be changed according to the change of the connection partner.)

Patterns of possible combinations of connections will be described below.

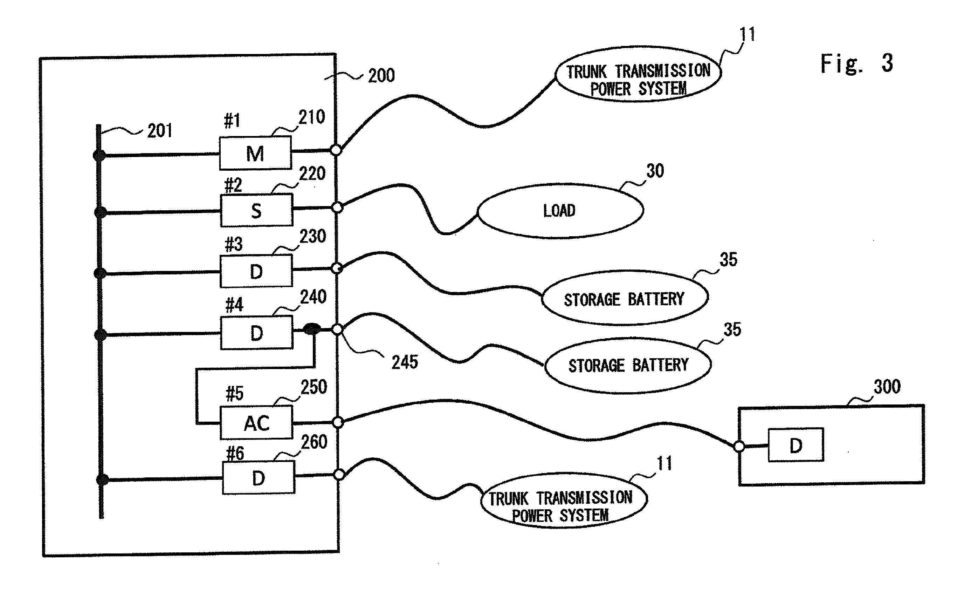

In the following description, the expressions in the diagrams are simplified as shown in Fig. 3.

Specifically, the master leg is denoted by M.

The stand-alone leg is denoted by S.

The designated power transmission/reception leg is denoted by D.

The AC-through leg is denoted by AC.

Further, the legs may be differentiated from one another by numbers such as "#1" attached to the top of the legs as necessary.

While systematized symbols are attached for each of Figs. 3-12, the same elements are not necessarily denoted by the same reference symbols throughout the drawings.

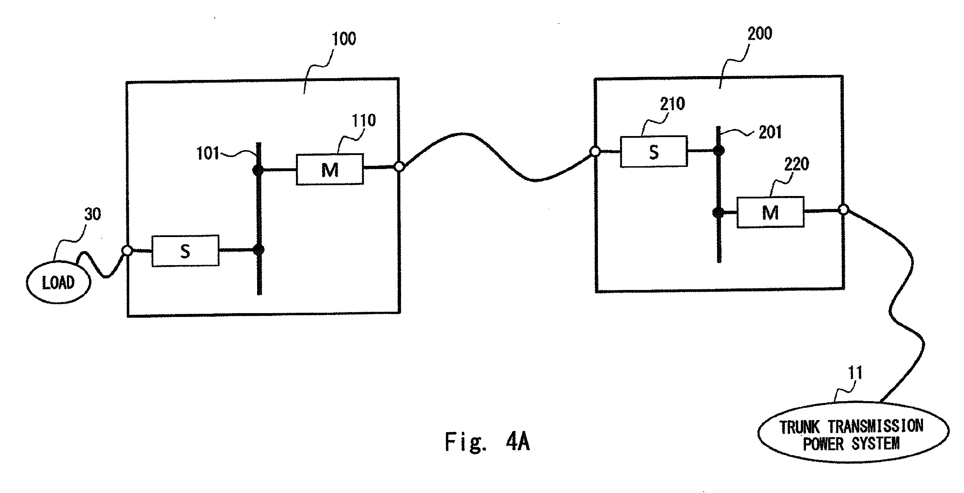

For example, the symbol 200 in Fig. 3 and the symbol 200 in Fig. 4A do not indicate the same component.

All the combinations of the connections shown in Fig. 3 are available. A first leg 210 is connected to the utility grid 11 as a master leg. This connection has already been described above.

A second leg 220 is connected to the load 30 as the stand-alone leg. This connection has already been described above as well.

A third leg 230 and a fourth leg 240 are connected to the storage battery 35 as the designated power transmission/reception legs. This connection has already been described above as well.

A fifth leg 250 is an AC-through leg. The AC-through leg 250 is connected to the designated power transmission/reception leg of another power router 300 and the AC-through leg 250 is connected to the storage battery 35 through a connection terminal 245 of the fourth leg 240. Since the AC-through leg 250 does not include a power conversion unit, this above connection relation is equivalent to the state in which the designated power transmission/reception leg of the other power router 300 is directly connected to the storage battery 35. It is understood that such a connection is permitted.

A sixth leg 260 is connected to the utility grid 11 as the designated power transmission/reception leg. If it is assumed that a predetermined power is received from the utility grid 11 through the sixth leg 260, it is understood that such a connection is permitted.

Considering that the first leg 210 is the master leg, if the power received by the sixth leg 260 is insufficient to keep the voltage of the DC bus 201 to the rated voltage, the master leg 210 receives necessary power from the utility grid 11. In contrast, when the power received by the sixth leg 260 exceeds the amount that is necessary to keep the voltage of the DC bus 201 to the rated voltage, the master leg 210 transfers excessive power to the utility grid 11.

Next, a case in which the power routers are connected to each other will be described. Connecting the power routers means connecting a leg of one power router and a leg of another power router. When the legs are connected to each other, the operation modes that can be combined are restricted.

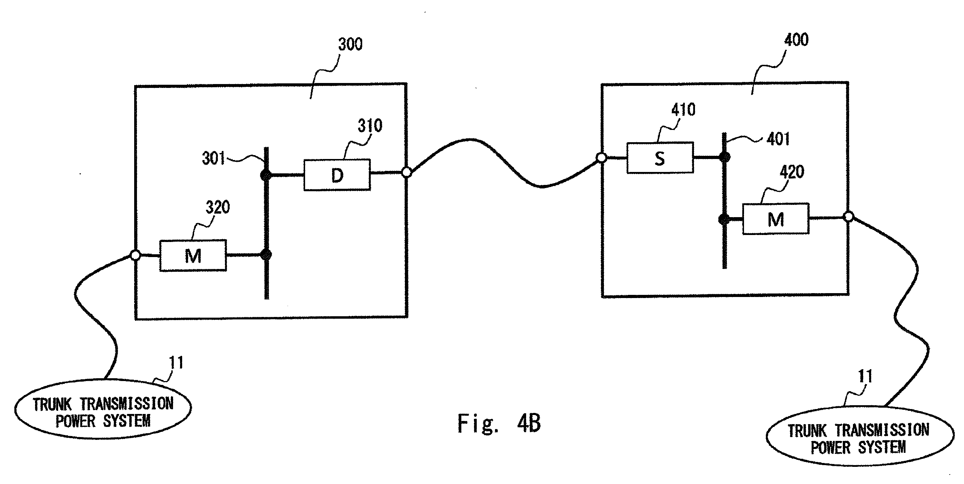

Both of the combinations of the connections shown in Figs. 4A and 4B are available. In Fig. 4A, the master leg 110 of the first power router 100 and the stand-alone leg 210 of the second power router 200 are connected. While the details of this connection will not be described, the master leg 220 of the second power router 200 is connected to the utility grid 11, whereby the voltage of the DC bus 201 of the second power router 200 is kept to be the rated voltage.

In Fig. 4A, when power is supplied to the load 30 from the first power router 100, the voltage of the DC bus 101 decreases. The master leg 110 obtains power from the connection partner so as to keep the voltage of the DC bus 101. That is, the master leg 110 draws insufficient power from the stand-alone leg 210 of the second power router 200. The stand-alone leg 210 of the second power router 200 sends power required from the connection partner (in this example, the master leg 110). While the voltage decreases by the amount of power sent from the stand-alone leg 210 in the DC bus 201 of the second power router 200, this is supplemented from the utility grid 11 by the master leg 220. In this way, the first power router 100 can obtain a necessary amount of power from the second power router 200.

As described above, even when the master leg 110 of the first power router 100 and the stand-alone leg 210 of the second power router 200 are connected, each of the master leg 110 and the stand-alone leg 210 can each play a role. Therefore, no disadvantage occurs in each of the operations in the master leg 110 and the stand-alone leg 210. Accordingly, the master leg and the stand-alone leg may be connected as shown in Fig. 4A.

In Fig. 4B, a designated power transmission/reception leg 310 of the third power router 300 and a stand-alone leg 410 of the fourth power router 400 are connected. While not described in detail, a master leg 320 of the third power router 300 and a master leg 420 of the fourth power router 400 are each connected to the utility grid 11. DC buses 301 and 401 of the third power router 300 and the fourth power router 400 thus keep the rated voltage.

It is assumed that the designated power transmission/reception leg 310 of the third power router 300 is instructed to receive a designated power according to the instruction from the management server 50. The designated power transmission/reception leg 310 draws the designated power from the stand-alone leg 410 of the fourth power router 400. The stand-alone leg 410 of the fourth power router 400 sends power required from the connection partner (in this example, the designated power transmission/reception leg 310). While the voltage of the DC bus 401 of the fourth power router 400 decreases by the amount of power sent from the stand-alone leg 410, this is supplemented from the utility grid 11 by the master leg 420.

As described above, even when the designated power transmission/reception leg 310 of the third power router 300 and the stand-alone leg 410 of the fourth power router 400 are connected, the designated power transmission/reception leg 310 and the stand-alone leg 410 can each play a role. Therefore, no disadvantage occurs in each of the operations in the designated power transmission/reception leg 310 and the stand-alone leg 410. Accordingly, the designated power transmission/reception leg and the stand-alone leg may be connected as shown in Fig. 4B.

While the case in which the third power router 300 obtains power from the fourth power router 400 has been described above, it should be understood that there is also no disadvantage in a case in which the third power router 300 gives power to the fourth power router 400.

It is therefore possible to interchange the designated power between the third power router 300 and the fourth power router 400.

When the legs having the power conversion units are directly connected to each other, only two connection patterns shown in Figs. 4A and 4B are permitted.

Specifically, only the case in which the master leg and the stand-alone leg are connected and the case in which the designated power transmission/reception leg and the stand-alone leg are connected are permitted.

Next, combinations of the legs that cannot be connected will be described.

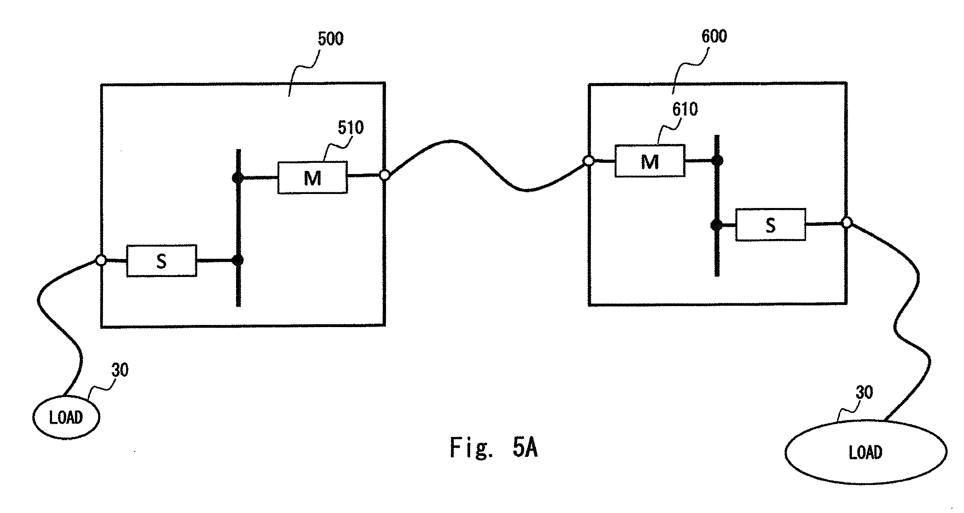

Figs. 5A to 5D are patterns in which legs should not be connected.

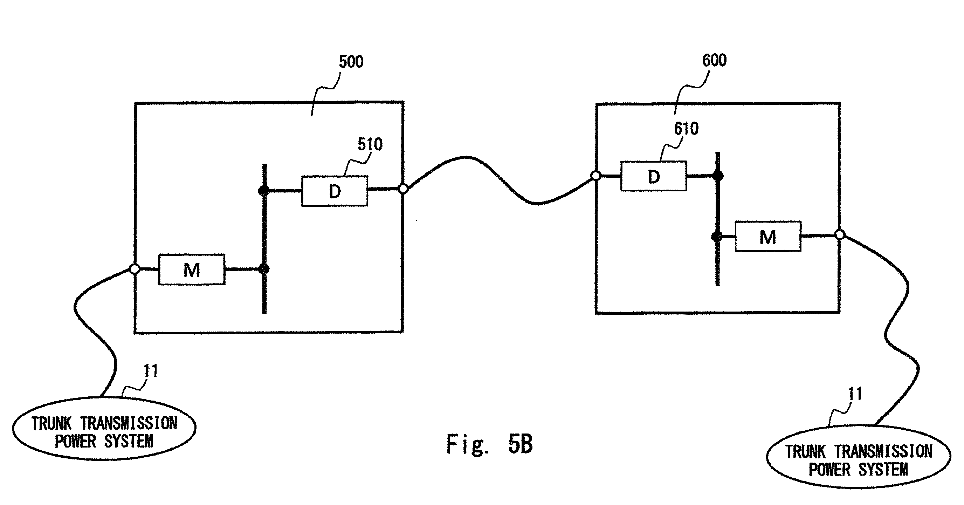

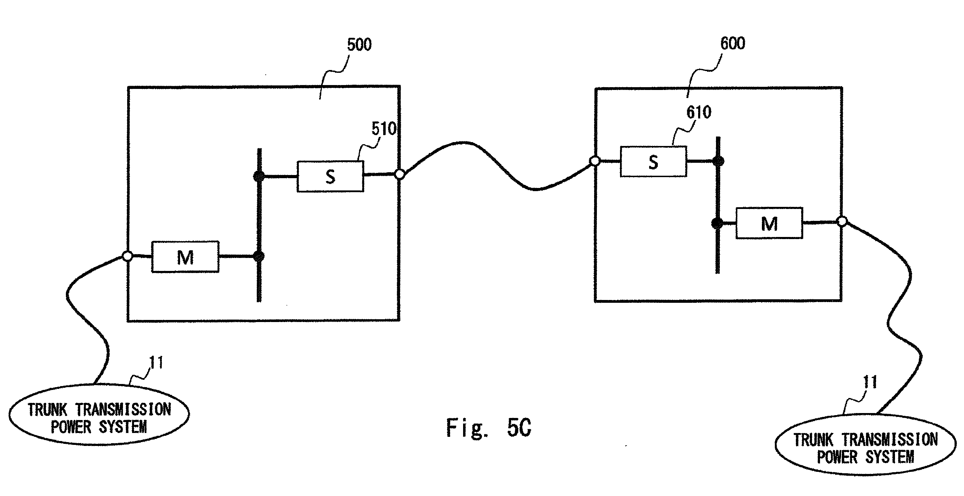

As shown in Figs. 5A, 5B, and 5C, the legs that are in the same operation mode must not be connected.

In the case of Fig. 5A, for example, the master legs are connected.

The master leg first performs processing for generating power in synchronization with the phase, the frequency, and the voltage of the connection partner, as described above in the description of the operation.

When the connection partner is also a master leg, each master leg tries to be synchronized with the voltage and the frequency of the other master leg. However, since the master leg does not establish the voltage and the frequency in a stand-alone manner, the synchronous processing stated above does not succeed.

Therefore, the master legs cannot be connected to each other.

There are other reasons why the master legs cannot be connected to each other as follows.

The master leg needs to draw power from the connection partner in order to keep the voltage of the DC bus. (Otherwise excessive power needs to be made to flow out to the connection partner in order to keep the voltage of the DC bus.) When the master legs are connected to each other, each master leg cannot meet the requirements of the connection partner. (If the master legs are connected to each other, neither of the power routers can keep the voltage of the DC bus. This may cause a malfunction such as blackout in each power cell.) In this way, if the master legs are connected to each other, the roles of the master legs conflict with each other (do not match). The master legs therefore must not be connected to each other.

While the designated power transmission/reception legs are connected to each other in Fig. 5B, it should be understood that this connection is not available as well.

As described above in the description of the operation, similar to the master leg, the designated power transmission/reception leg first performs processing for generating power in synchronization with the phase, the frequency, and the voltage of the connection partner.

When the connection partner is also a designated power transmission/reception leg, each leg tries to be synchronized with the voltage and the frequency of the other leg. However, since the designated power transmission/reception leg does not establish the voltage and frequency in a stand-alone manner, the synchronous processing stated above does not succeed.

Therefore, the designated power transmission/reception legs cannot be connected to each other.

There are other reasons why the above legs cannot be connected to each other as follows.

Even if the designated transmitted power that should be sent by one designated power transmission/reception leg 510 is made equal to the designated received power that should be received by the other designated power transmission/reception leg 610, such designated power transmission/reception legs should not be connected to each other. Assume a case, for example, in which one designated power transmission/reception leg 510 adjusts the power conversion unit to send the designated transmitted power. (For example, the output voltage is made higher than that of the connection partner by a predetermined value.) On the other hand, the other designated power transmission/reception leg 610 adjusts the power conversion unit to receive the designated received power. (For example, the output voltage is made lower than that of the connection partner by a predetermined value.) It will be understood that, when such an adjustment operation is executed in both of the designated power transmission/reception legs 510 and 610 at the same time, both of the designated power transmission/reception legs 510 and 610 become uncontrollable.

While the stand-alone legs are connected in Fig. 5C, it should be understood that such a connection is prohibited.

The stand-alone leg generates a voltage and a frequency by itself.

If one of the voltage, the frequency, and the phase generated by the two stand-alone legs is deviated from the other by even a slight amount in a state in which the stand-alone legs are connected, unintended power flows between the two stand-alone legs.

It is impossible to completely keep the voltage, the frequency, and the phase generated by the two stand-alone legs to be equal. Therefore, the stand-alone legs should not be connected.

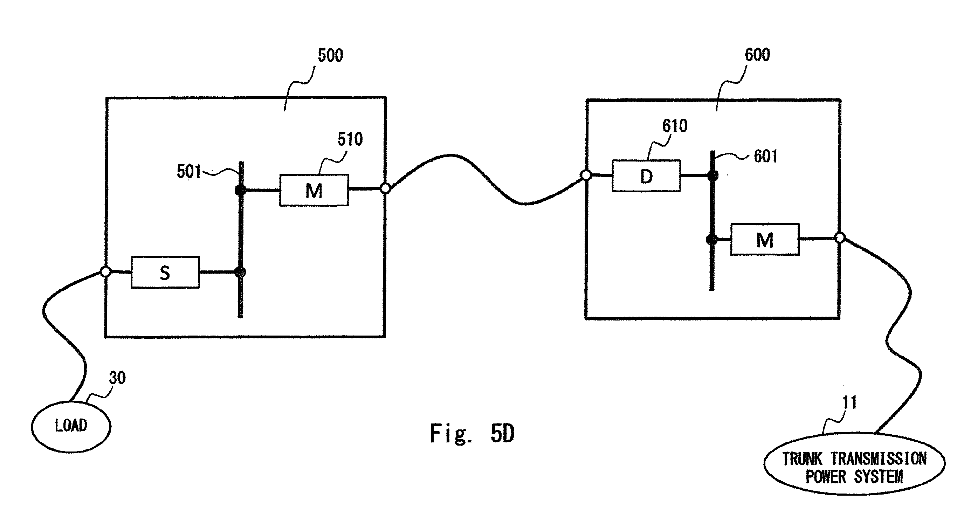

In Fig. 5D, the master leg and the designated power transmission/reception leg are connected.

It should be understood from the above description that this connection is not available as well. Even when the master leg 510 transmits power to or receives power from the connection partner to keep the voltage of the DC bus 501, the designated power transmission/reception leg 610 does not transmit or receive power according to the request from the master leg 510. Accordingly, the master leg 510 cannot keep the voltage of the DC bus 501. Further, even when the designated power transmission/reception leg 610 transmits designated power to or receives it from the connection partner (510), the master leg 510 does not transmit or receive power according to the request from the designated power transmission/reception leg 610. Accordingly, the designated power transmission/reception leg 610 cannot transmit the designated power to or receive it from the connection partner (in this example, the master leg 510).

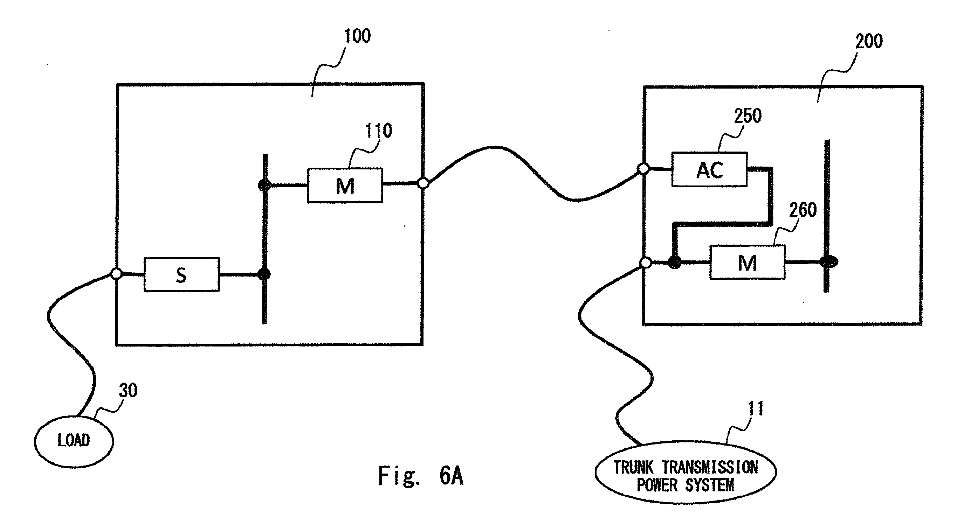

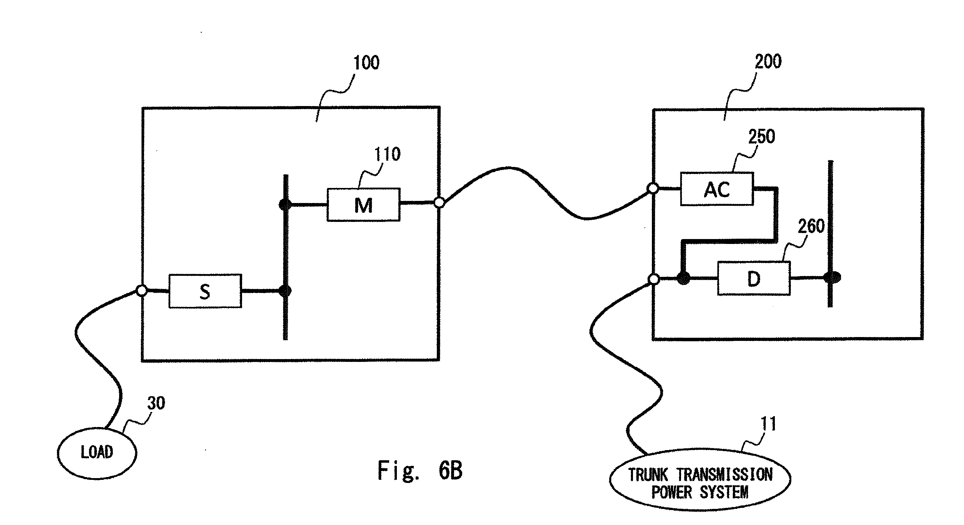

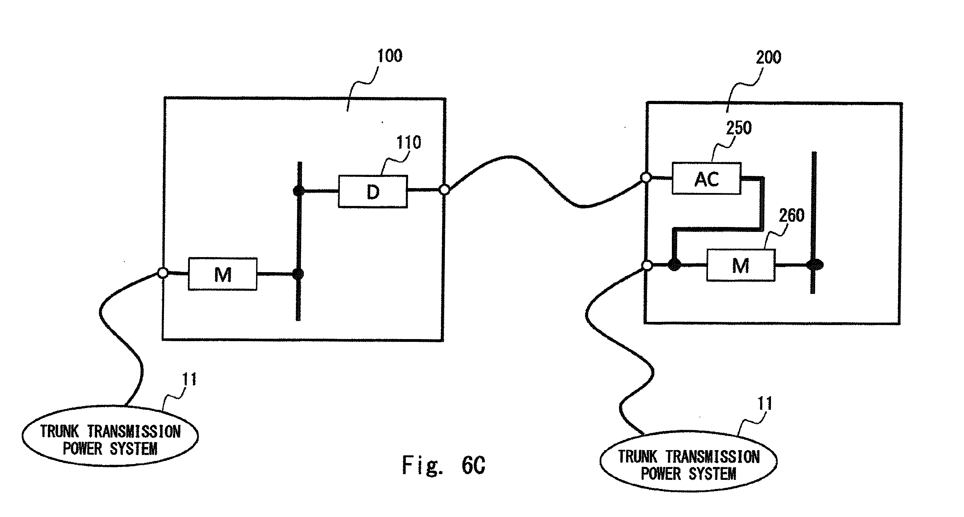

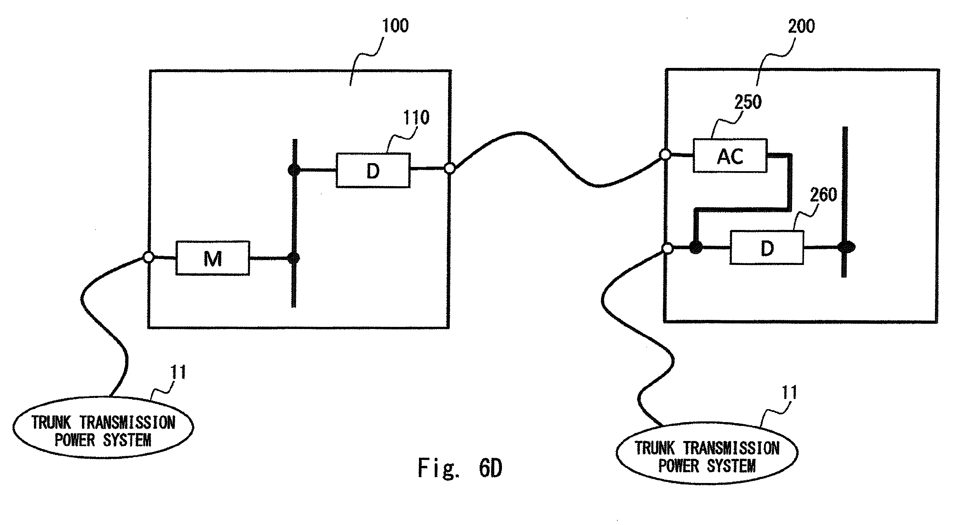

The case in which the legs including power conversion units are connected has been stated above. When an AC-through leg is taken into consideration, patterns shown in Figs. 6A to 6D are also available. Since the AC-through leg does not include a power conversion unit, it is a simple bypass. Accordingly, as shown in Figs. 6A and 6B, the situation in which the master leg 110 of the first power router 100 is connected to the utility grid 11 through the AC-through leg 250 of the second power router 200 is substantially equal to the situation in which the master leg 110 is directly connected to the utility grid 11. In a similar way, as shown in Figs. 6C and 6D, the situation in which the designated power transmission/reception leg 110 of the first power router 100 is connected to the utility grid 11 through the AC-through leg 250 of the second power router 200 is substantially equal to the situation in which the designated power transmission/reception leg 110 is directly connected to the utility grid 11.

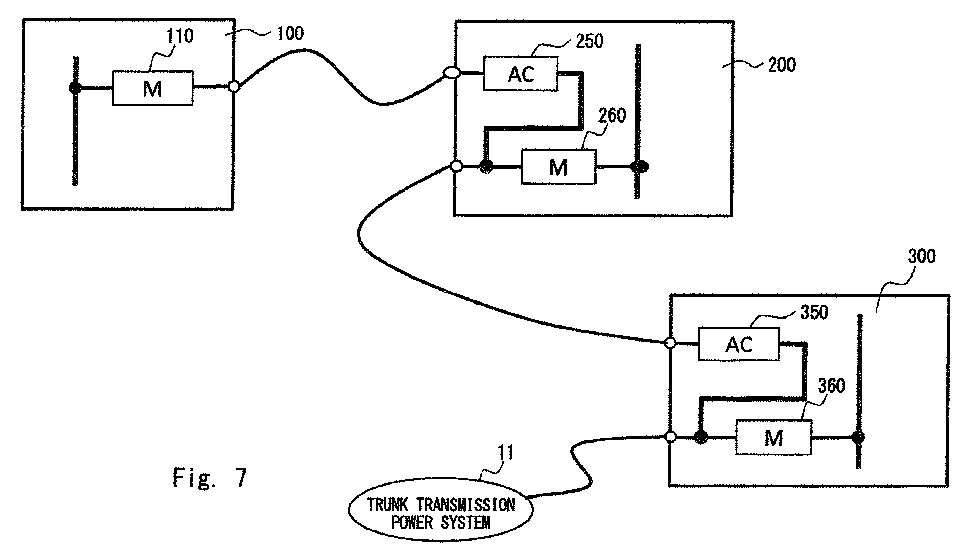

Still, it is convenient to provide the AC-through leg. There may be a case, for example, in which the distance from the first power router 100 to the utility grid 11 is extremely long and some power routers 200 and 300 need to be passed to connect the first power router 100 to the utility grid 11, as shown in Fig. 7.

If it is assumed that the AC-through leg is not provided, as shown in Fig. 4A, one or a plurality of stand-alone legs need to be passed. When a leg including a power conversion unit is passed, it requires conversion from AC power into DC power and conversion from DC power into AC power. The power conversion causes an energy loss, though the loss is low (several %). It is inefficient to require a power conversion a plurality of times only to connect the power router to the utility grid.

It is therefore preferable that the AC-through leg which does not include a power conversion unit is provided in the power router.

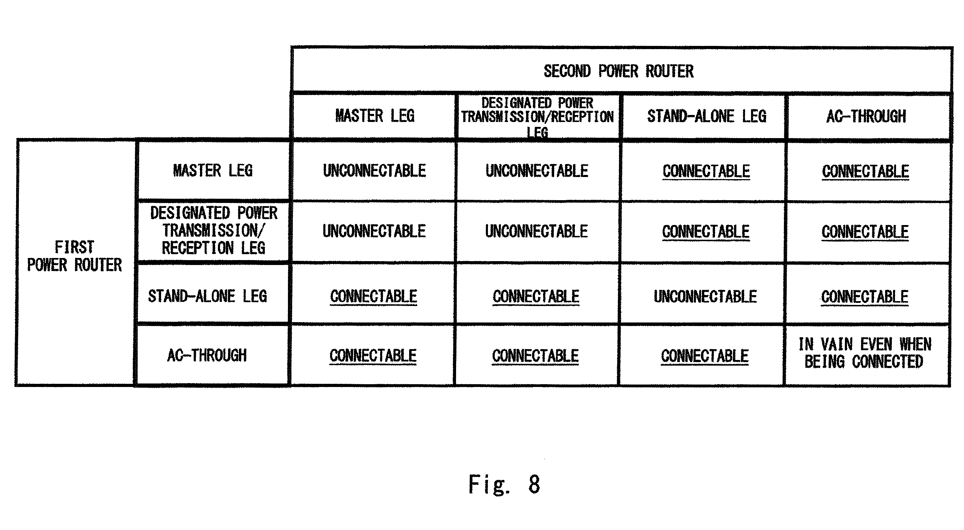

Fig. 8 shows the combination of connections described above.

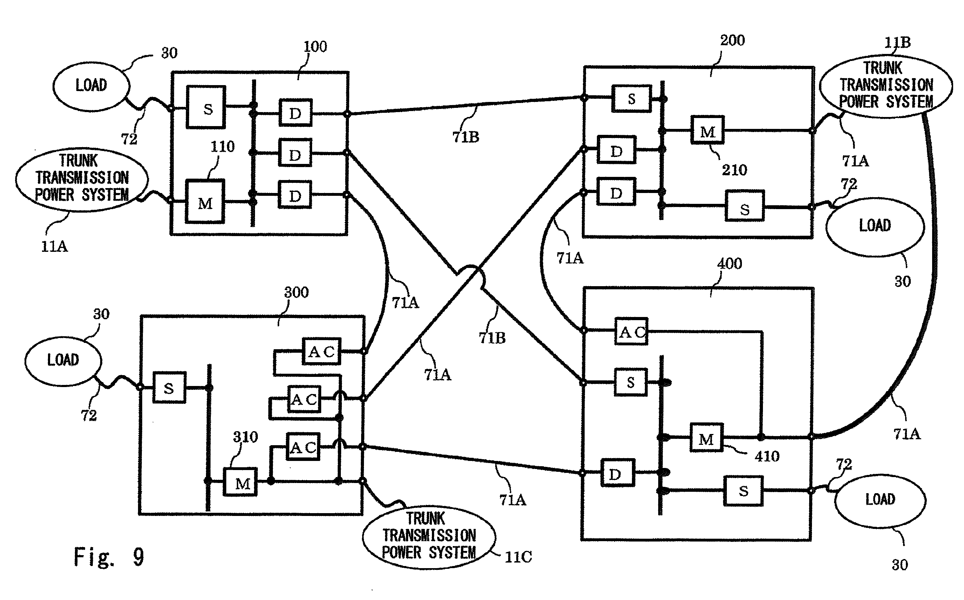

Fig. 9 shows one example in which the four power routers 100-400 are interconnected.

Since all of the connection relations have been described above, each connection partner will not be described in detail. It would be understood, however, that all of the connection relations are permitted.

Now, the connection line which connects the power router and the connection partner will be additionally described.

When the connection line that connects power routers is called a power-transmission line, the power-transmission line may be a part of the utility grid or may be separated from the utility grid.

(In Fig. 9, the power-transmission line which is a part of the utility grid is denoted by the symbol 71A and the power-transmission line separated from the utility grid is denoted by the symbol 71B.)

In summary, a plurality of power routers may be connected to the utility grid. In this way, by connecting two or more power routers through the utility grid, power interchange can be performed among the plurality of power routers through the utility grid, and the utility grid can adjust the excessive power or the insufficient power to be interchanged. Alternatively, two or more power routers may be connected to each other without the intervention of the utility grid.

Further, when the connection line that connects the power router and the load (or the distributed power supply) is called a distribution line 72, the distribution line 72 is separated from the utility grid 11. In summary, the distribution line 72 that connects the power router and the load (or distributed power supply) is not connected to the utility grid 11.

Further, as shown in Fig. 10, the power routers 100-400 may be connected like a bus connection.

While a description of the operation mode of each leg is omitted, it is needless to say that the operation mode of each leg needs to be appropriately selected in consideration of the direction of power interchange and the connection restrictions described above.

As a matter of course, the utility grid 11 may be replaced by a distributed power supply such as a power generation facility or a storage battery in Fig. 10. That is, the plurality of power routers may be connected to the distributed power supply by a bus.

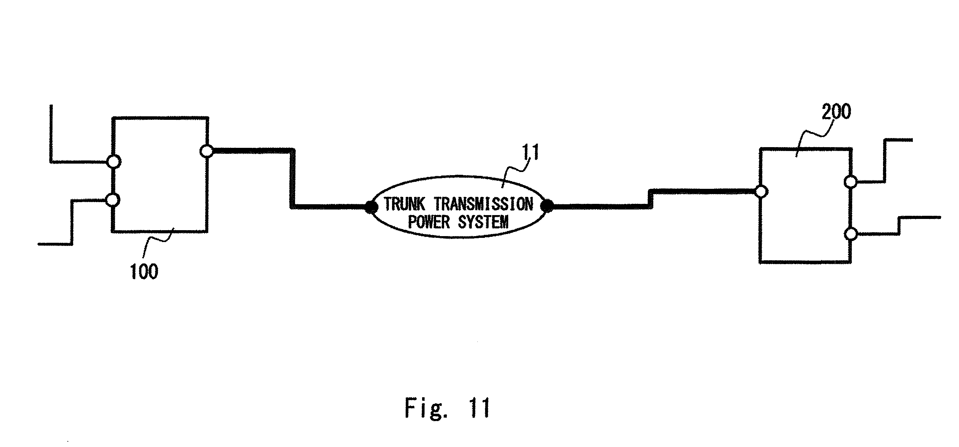

Further, the example shown in Fig. 11 is an example of the connection form in which the two power routers 100 and 200 are connected to the utility grid 11.

In Fig. 11, the utility grid 11 may be replaced by a distributed power supply.

As described above, the connection partner of the power router may be a utility grid, a distributed power supply including a storage battery or a power generation facility, or another power router. In this specification and claims, the above are collectively called a power system.

As described above, with the power router according to this exemplary embodiment, the following effects can be achieved.

That is, with the power router according to this exemplary embodiment, it is possible to build a power network system in which the power cells are asynchronously interconnected. According to the connection restrictions described in this exemplary embodiment, legs can be connected to each other so that the roles of the legs do not conflict with each other. It is therefore possible to extend the power network system and to operate the whole system in a stable manner.

While the present invention has been described with reference to the exemplary embodiment, the present invention is not limited to the above exemplary embodiment. Various changes that can be understood by those skilled in the art can be made on the configuration and the details of the present invention within the scope of the present invention.

The present invention may achieve any desired processing by causing a central processing unit (CPU) to execute a computer program. Further, the program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magnetooptical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

This application is based upon and claims the benefit of priority from Japanese Patent Application No. 2012-231590, filed on October 19, 2012, the disclosure of which is incorporated herein in its entirety by reference.

### Reference Signs List

- 10: POWER NETWORK SYSTEM
- 11: UTILITY GRID
- 12: LARGE-SCALE POWER PLANT
- 21: POWER CELL
- 30: LOAD
- 31: HOUSE
- 32: BUILDING
- 33: SOLAR PANEL
- 34: WIND TURBINE
- 35: POWER STORAGE SYSTEM (STORAGE BATTERY)
- 41: POWER ROUTER
- 50: MANAGEMENT SERVER
- 51: COMMUNICATION NETWORK
- 100: POWER ROUTER
- 101: DC BUS
- 102: SMOOTHING CAPACITOR
- 103: VOLTAGE SENSOR
- 110: LEG
- 111: POWER CONVERSION UNIT
- 111D: FEEDBACK DIODE
- 111P: ANTI-PARALLEL CIRCUIT
- 111T: THYRISTOR
- 112: CURRENT SENSOR
- 113: SWITCH
- 114: VOLTAGE SENSOR
- 115: CONNECTION TERMINAL

## Claims

1. A power router to asynchronously connect a power cell to an external power system, the power router comprising:
a DC bus whose voltage is kept to a predetermined rated voltage;
a power conversion leg including one connection end connected to the DC bus and another connection end connected to an external connection partner as an external connection terminal, the power conversion leg including a function of bidirectionally converting power between the one connection end and the other connection end; and
a controller that controls an operation of the power conversion leg, wherein:
a plurality of the power conversion legs are provided,
the power router is controlled according to an instruction from a management server,
the controller controls an operation of the power conversion leg in an operation mode which is one of a master mode and a designated power transmission/reception mode,
the power conversion leg operated in the master mode supplements an insufficient power from the connection partner when the voltage of the DC bus decreases from a rated voltage, and sends an excessive power to the connection partner when the voltage of the DC bus increases from the rated voltage,
the power conversion leg operated in the designated power transmission/reception mode sends a designated power to the connection partner or receives the designated power from the connection partner according to a designation from the management server, and
the controller sets the operation mode of at least one of the power conversion legs to the master mode during the operation of the power router.

2. The power router according to Claim 1, wherein:
the operation mode of the power conversion leg further includes a stand-alone mode in addition to the master mode and the designated power transmission/reception mode, and
the power conversion leg operated in the stand-alone mode generates a voltage of an amplitude and a frequency specified by the management server and sends and receives power to and from the connection partner.

3. The power router according to Claim 1 or 2, further comprising an AC-through leg including one connection end connected to an external connection partner as an external connection terminal and another connection end connected to an external connection terminal of another leg by internal wiring, the AC-through leg conducting one connection end and the other connection end without an intervention of power conversion.

4. A power network system comprising:
one or a plurality of the power routers according to Claim 3; and
a power system to which the power router is directly or indirectly connected, wherein the connection partner to which the power conversion leg operated in the master mode is directly or indirectly connected is restricted to one of a distributed power supply and a utility grid connected to a main power plant.

5. The power network system according to Claim 4, wherein, when the power conversion leg operated in the master mode is indirectly connected to the utility grid or the distributed power supply, only one of an AC-through leg and a power conversion leg operated in a stand-alone mode is interposed between the power conversion leg and the utility grid or the distributed power supply.

6. The power network system according to Claim 4 or 5,
wherein the connection partner to which the power conversion leg operated in the designated power transmission/reception mode is directly or indirectly connected is restricted to any one of the utility grid, the distributed power supply, and the power conversion leg operated in the stand-alone mode.

7. The power network system according to Claim 6, wherein, when the power conversion leg operated in the designated power transmission/reception mode is indirectly connected to one of the utility grid, the distributed power supply, and the power conversion leg operated in the stand-alone mode, only an AC-through leg is interposed between the power conversion leg operated in the designated power transmission/reception mode and one of the utility grid, the distributed power supply, and the power conversion leg operated in the stand-alone mode.

8. A power network system comprising two or more of the power routers according to any one of Claims 1 to 3, wherein power is sent between the power routers.

9. A power interchange method comprising interchanging power by sending power between the power routers using two or more of the power routers according to any one of Claims 1 to 3.

10. An operation control program of a power router that comprises:
a DC bus whose voltage is kept to a predetermined rated voltage; and
a power conversion leg including one connection end connected to the DC bus and another connection end connected to an external connection partner as an external connection terminal, the power conversion leg including a function of bidirectionally converting power between the one connection end and the other connection end, in which:
a plurality of the power conversion legs are provided,
the power router is controlled according to an instruction from a management server,
the power router asynchronously connects a power cell to an external power system,
the power router is built into a computer and
the power router causes the computer to control an operation of the power conversion leg in an operation mode which is one of a master mode and a designated power transmission/reception mode,
the power conversion leg operated in the master mode supplements an insufficient power from the connection partner when the voltage of the DC bus decreases from a rated voltage, and sends an excessive power to the connection partner when the voltage of the DC bus increases from the rated voltage,
the power conversion leg operated in the designated power transmission/reception mode sends a designated power to the connection partner or receives the designated power from the connection partner according to a designation from the management server, and
the operation mode of at least one of the power conversion legs is set to the master mode during the operation of the power router.
